# EUROPÄISCHE PATENTANMELDUNG

(11) **EP 0 769 683 A2**
(43) Veröffentlichungstag der Anmeldung: **23.04.1997**
(21) Anmeldenummer: 96116314.4
(22) Anmeldetag: 11.10.1996
(51) Int. Cl.: G01F 23/296

(54) **Anordnung zur Überwachung eines vorbestimmten Füllstands einer Flüssigkeit in einem Behälter**

(30) Priorität: 17.10.1995 DE 19538677
(71) Anmelder: Endress + Hauser GmbH + Co., 79689 Maulburg (DE)
(72) Erfinder: Müller, Roland, 79585 Steinen (DE); Schwald, Rolf, 79650 Schopfheim (DE); Maier, Winfried, 79689 Maulburg (DE)
(74) Vertreter: Leiser, Gottfried, Dipl.-Ing.

(57) **Zusammenfassung**

Zur Überwachung eines vorbestimmten Füllstands einer Flüssigkeit in einem Behälter ist an einer auf der Höhe des zu überwachenden Füllstands liegenden Meßstelle an der Außenseite der Behälterwand ein Ultraschallsensor montiert, der einen Ultraschallwandler mit einer an der Behälterwand anliegenden Membran enthält. Die Bestandteile des Ultraschallsensors einschließlich des Ultraschallwandlers sind in einem Sensorblock zusammengefaßt, der lösbar mit einem an der Behälterwand befestigten Adapter verbunden ist, der so ausgebildet ist, daß er an Behältern unterschiedlicher Form und/oder aus unterschiedlichen Materialien auf beliebige Weise befestigt werden kann.

## Beschreibung

Die Erfindung betrifft eine Anordnung zur Überwachung eines vorbestimmten Füllstands einer Flüssigkeit in einem Behälter mit einem Ultraschallsensor, der an einer auf der Höhe des zu überwachenden Füllstands liegenden Meßstelle an der Außenseite der Behälterwand montiert ist und einen Ultraschallwandler mit einer an der Behälterwand anliegenden Membran enthält.

Bei Anordnungen dieser Art ist es erforderlich, den Ultraschallsensor an Behältern unterschiedlicher Form und/oder aus unterschiedlichen Materialien anzubringen. Beispielsweise ist es aus der PCT-Veröffentlichung WO 95/12804 bekannt, einen Ultraschallsensor mittels eines um den Behälter gelegten Spannbandes, einer Spannzange oder Klebebändern am Behälter zu befestigen. Für jede dieser Befestigungsarten ist der Ultraschallsensor in besonderer Weise ausgebildet. Im übrigen handelt es sich hierbei um Befestigungsweisen, die speziell für kleine Behälter, insbesondere für medizinische Zwecke, ausgebildet sind und die für die Befestigung an großen Behältern unter rauhen Bedingungen, insbesondere im industriellen Bereich, nicht geeignet sind.

Aufgabe der Erfindung ist die Schaffung einer Anordnung der eingangs angegebenen Art, bei welcher der Ultraschallsensor an Behältern unterschiedlicher Form und Größe sowie aus unterschiedlichen Materialien auf die jeweils günstigste Weise befestigt werden kann, ohne daß hierfür konstruktive Änderungen am Ultraschallsensor erforderlich sind.

Zur Lösung dieser Aufgabe enthält die Anordnung nach der Erfindung einen Adapter, der so ausgebildet ist, daß er an Behältern unterschiedlicher Form und/oder aus unterschiedlichen Materialien auf beliebige Weise befestigt werden kann, und einen Sensorblock, der die Bestandteile des Ultraschallsensors einschließlich des Ultraschallwandlers enthält und lösbar mit dem an der Behälterwand befestigten Adapter verbunden ist.

Bei der erfindungsgemäßen Anordnung wird der Adapter zunächst ohne den Sensorblock an der gewünschten Stelle der Behälterwand befestigt. Dies kann auf mehrere verschiedene Weisen geschehen, von denen die jeweils für die Form und das Material des Behälters günstigste ausgewählt wird. Der Adapter ist so ausgebildet, daß er sowohl an einer ebenen als auch an einer gekrümmten Behälterwand angebracht werden kann. Erst wenn der Adapter am Behälter befestigt ist, wird der Sensorblock mit dem Adapter verbunden. Der Sensorblock kann daher, unabhängig von Form, Größe und Material des Behälters und unabhängig von der gewählten Befestigungsweise stets gleich ausgebildet sein. Selbst wenn in einem Sonderfall der gleiche Adapter für einen bestimmten Behälter nicht geeignet ist, braucht nur der Adapter konstruktiv geändert zu werden, was auf einfache Weise und mit geringem Aufwand möglich ist, während der Sensorblock stets unverändert bleiben kann.

Eine vorteilhafte Ausgestaltung der Erfindung besteht darin, daß der Adapter einen an den Umriß des Sensorblocks angepaßten Rahmen aufweist, der an der der Behälterwand zugewandten Seite mit einer rings um den Umfang verlaufenden Dichtung versehen ist. Die Dichtung schützt die Kontaktstelle zwischen der Membran des Ultraschallwandlers und der Behälterwand vor Spritzwasser und anderen Einflüssen.

Vorteilhafte Ausgestaltungen und Weiterbildungen der Erfindung sind in den Unteransprüchen gekennzeichnet.

Weitere Merkmale und Vorteile der Erfindung ergeben sich aus der folgenden Beschreibung eines Ausführungsbeispiels anhand der Zeichnungen. In den Zeichnungen zeigen:
- Fig. 1: eine schematische Darstellung zur Erläuterung der Überwachung von vorbestimmten Füllständen einer Flüssigkeit in einem Behälter,
- Fig. 2: eine perspektivische Ansicht einer Ausführungsform des bei der Erfindung angewendeten Ultraschallsensors,
- Fig. 3: einen Längsschnitt durch den Ultraschallsensor von Fig. 2 bei Anbringung an einer ebenen Behälterwand,
- Fig. 4: einen Querschnitt durch den Ultraschallsensor von Fig. 2 bei Anbringung an einer zylindrischen Behälterwand,
- Fig. 5: eine Schnittansicht des im Ultraschallsensor von Fig. 2 bis 4 verwendeten Ultraschallwandlers,
- Fig. 6: eine Draufsicht auf eine im Ultraschallwandler von Fig. 5 verwendete Montagehülse,
- Fig. 7: eine Schnittansicht der Montagehülse von Fig. 6,
- Fig. 8: eine perspektivische Ansicht der Montagehülse von Fig. 6 und 7,
- Fig. 9: eine bevorzugte Ausführungsform des Adapters, der an einer zylindrischen Behälterwand angebracht ist, und
- Fig. 10: den Adapter von Fig. 9 bei Anbringung an einer ebenen Behälterwand.

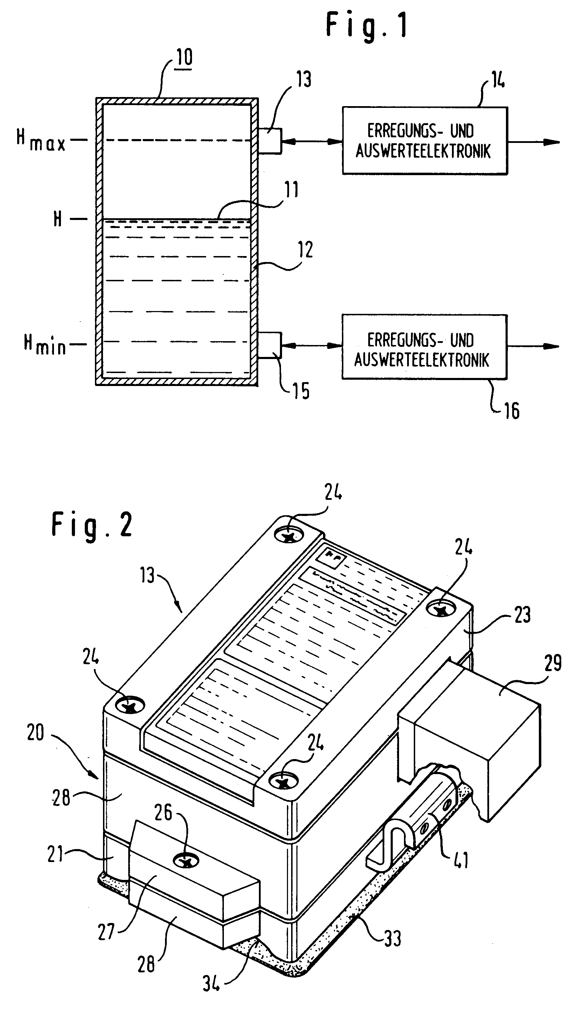

Fig. 1 zeigt einen Behälter 10, der bis zu einer Höhe H mit einer Flüssigkeit 11 gefüllt ist. Die Höhe H, in der sich die Oberfläche der Flüssigkeit 11 über dem Boden des Behälters 10 befindet, ist der momentane Füllstand im Behälter. Der Füllstand soll eine maximale Höhe Hₘₐₓ nicht überschreiten und eine minimale Höhe Hₘᵢₙ nicht unterschreiten. Jeder dieser Grenzwerte des Füllstands wird auch "Grenzstand" genannt.

Zur Überwachung des oberen Grenzstands Hₘₐₓ ist an der Außenseite der Behälterwand 12 ein Füllstandssensor 13 angebracht, der mit einer Erregungs- und Auswerteelektronik 14 verbunden ist. Zur Überwachung des unteren Grenzstands Hₘᵢₙ ist an der Außenseite der Behälterwand 12 ein Füllstandssensor 15 angebracht, der mit einer Erregungs- und Auswerteelektronik 16 verbunden ist. Jeder der beiden Sensoren 13 und 15 ist so ausgebildet, daß mit seiner Hilfe durch die Behälterwand 12 hindurch festgestellt werden kann, ob sich die Flüssigkeit 11 im Behälter 10 auf der Höhe des Sensors 13 bzw. 15 befindet oder nicht. Zu diesem Zweck ist jeder der beiden Sensoren 13 und 15 als Ultraschallsensor ausgebildet, der in der Lage ist, bei Erregung durch einen elektrischen Wechselspannungsimpuls, der von der zugehörigen Erregungs- und Auswerteschaltung 14 bzw. 16 geliefert wird, einen Ultraschallimpuls zur Behälterwand 12 hin auszusenden und empfangene Ultraschallsignale in elektrische Wechselspannungssignale umzusetzen, die zur Elektronik 14 bzw. 16 übertragen werden. Die Elektronik 14 bzw. 16 wertet die Empfangssignale aus und gibt am Ausgang ein Signal ab, das anzeigt, ob der Füllstand im Behälter 10 über oder unter dem zu überwachenden Grenzstand liegt. Zu dieser Feststellung ist es daher nicht erforderlich, die Behälterwand 14 zu durchbrechen oder den Sensor in das Innere des Behälters 10 einzubringen. Aus diesem Grund stehen die Sensoren 14 und 16 auch nicht in direktem Kontakt mit der Flüssigkeit 11.

Die beiden Sensoren 13 und 15 sowie die jeweils zugehörige Elektronik 14 bzw. 16 sind völlig gleich ausgebildet. Nachfolgend wird daher nur der Sensor 13 und die Elektronik 14 im einzelnen beschrieben. Diese Beschreibung gilt in gleicher Weise für den Sensor 15 und die Elektronik 16.

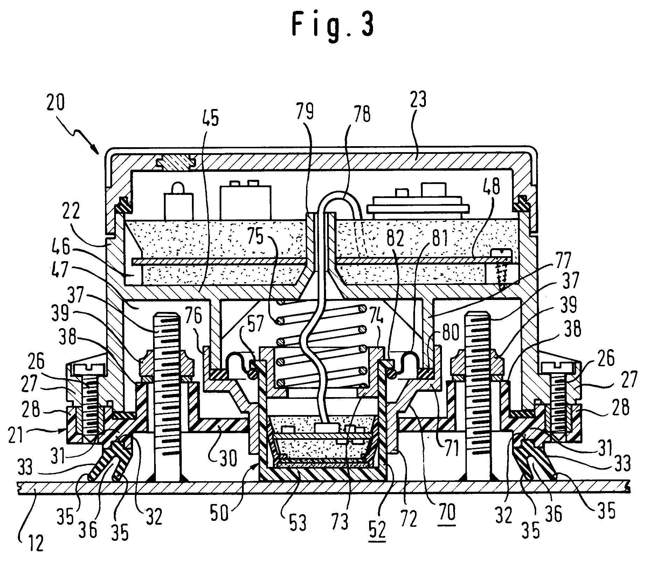

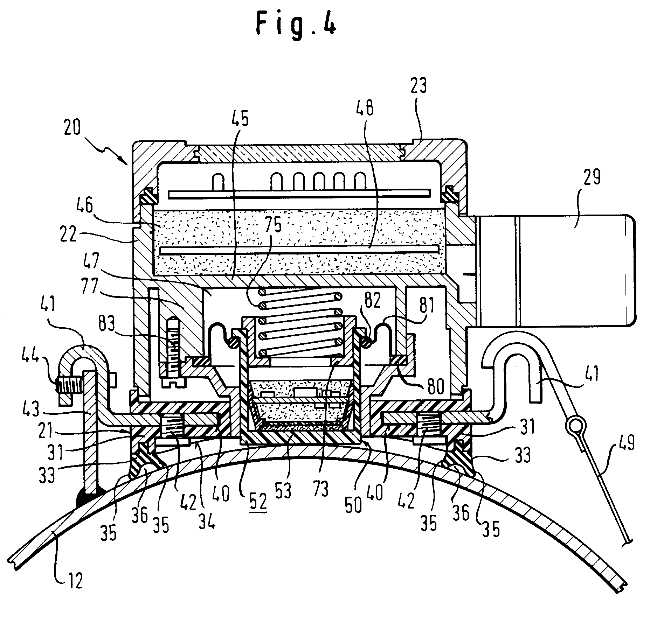

Fig. 2 zeigt eine perspektivische Ansicht des Sensors 13, und die Figuren 3 und 4 zeigen Schnittansichten des an der Behälterwand 12 befestigten Sensors 13. Fig. 3 zeigt einen Längsschnitt des Sensors 13 für den Fall, daß die Behälterwand eben ist, und Fig. 4 zeigt einen Querschnitt durch den Sensor für den Fall, daß die Behälterwand zylindrisch ist. Die Erregungs- und Auswerteelektronik 14, die in Fig. 1 zur Verdeutlichung vom Sensor 13 getrennt dargestellt ist, ist bei der in den Figuren 2 bis 4 dargestellten Ausführungsform mit dem Sensor 13 zusammengebaut.

Der in Fig. 2 gezeigte Sensor besteht aus einem Sensorblock 20, der alle Bestandteile des Ultraschallsensors und der Erregungs- und Auswerteelektronik enthält, und aus einem Adapter 21, der dazu dient, den Sensorblock 20 an Behältern unterschiedlicher Form und Größe sowie aus unterschiedlichen Materialien zu befestigen. Der Sensorblock 20 hat ein Sensorgehäuse 22, das durch einen Deckel 23 verschlossen ist, der mittels Schrauben 24 auf dem Sensorgehäuse 22 befestigt ist. Der Sensorblock 20 ist an dem Adapter 21 mittels Schrauben 26 befestigt, die durch Bohrungen in Vorsprüngen 27 an den Schmalseiten des Sensorgehäuses 22 hindurchgeführt und in Gewindebohrungen in entsprechenden Vorsprüngen 28 am Adapter 21 eingeschraubt sind. Nach Lösen der beiden Schrauben 26 kann der komplette Sensorblock von dem an der Behälterwand 12 befestigten Adapter 21 abgenommen werden. Umgekehrt wird zum Montieren eines Sensors der Adapter 21 ohne den Sensorblock 20 an der gewünschten Stelle einer Behälterwand in einer geeigneten Weise befestigt, und anschließend wird der Sensorblock 20 mit dem betriebsfertig montierten Ultraschallsensor auf den Adapter 21 aufgesetzt und mittels der Schrauben 26 befestigt. Ein seitlich vom Sensorgehäuse 22 abstehender Anschlußblock 29 ermöglicht die Verbindung der im Sensorgehäuse 22 untergebrachten Elektronik mit äußeren Anschlußleitern.

Der Adapter 21 ist ein Kunststoff-Formteil, das im wesentlichen aus einer Platte 30 besteht, deren Umriß dem Umriß des Sensorgehäuses 22 entspricht, bei dem dargestellten Beispiel also rechteckig ist. Rings um den Umfang der Platte 30 ist ein Rahmen 31 angeformt, der an der der Behälterwand zugewandten Seite mit einer Nut 32 versehen ist, in die eine Dichtung 33 eingesetzt ist. An den Längsseiten des Adapters 21, die bei einem zylindrischen Behälter 10 entlang den Mantellinien an der Behälterwand 12 anliegen, hat der Rahmen 31 eine gleichbleibende Höhe. An den Querseiten, die bei einem zylindrischen Behälter 10 entlang dem Umfang an der Behälterwand 12 anliegen, weist der Rahmen 31 eine kreisbogenförmige Ausnehmung 34 auf, wie in Fig. 2 an der vorderen Querseite zu erkennen ist. Der Krümmungsradius der Ausnehmung 34 entspricht dem Radius der Behälterwand 12 des Behälters 10 mit dem kleinsten Durchmesser, an dem der Adapter 21 anzubringen ist. Wenn der Ultraschallsensor 13 für Behälter bestimmt ist, deren Nennweite (Durchmesser) mindestens 200 mm beträgt, beträgt der Krümmungsradius der Ausnehmung 34 also 100 mm.

Die Dichtung 33 ist so ausgebildet, daß ihre zur Anlage an der Behälterwand bestimmte Dichtfläche in einer Ebene liegt, wenn der Adapter 21 noch nicht an der Behälterwand 12 angebracht ist und somit die Dichtung 33 noch nicht verformt ist. Damit diese Bedingung erfüllt ist, hat die Dichtung 33 entlang den Längsseiten des Rahmens 31 eine gleichbleibende Höhe, während ihre Höhe im Bereich jeder Querseite entsprechend der Form der Ausnehmung 34 zur Mitte hin kreisbogenförmig zunimmt. Wie aus den Figuren 3 und 4 zu ersehen ist, ist die Dichtung 33 vorzugsweise mit zwei Dichtlippen 35 ausgebildet, zwischen denen eine Einkerbung 36 besteht. Die Dichtlippen 35 sind entlang den Längsseiten des Rahmens 31 (Fig. 4) verhältnismäßig niedrig, und die Tiefe der Einkerbung 36 ist dort entsprechend gering. Entlang den Querseiten des Rahmens 31 nimmt dagegen die Höhe der Dichtlippen 35 und die Tiefe der Einkerbung 36 in gleichem Maße zu wie die Höhe der Dichtung 33. Da die Schnittebene der Schnittansicht von Fig. 3 durch die Stellen geht, an denen die Ausnehmungen 34 ihre größte Tiefe haben, haben in dieser Schnittansicht die Dichtlippen 35 ihre größte Höhe und die Einkerbungen 36 ihre größte Tiefe.

Wenn der Adapter 21 an einer ebenen Behälterwand 12 befestigt wird (Fig. 3), werden die Dichtlippen 35 im Bereich der Ausnehmungen 34 im gleichen Ausmaß zusammengedrückt wie im Bereich der geraden Längsseiten des Rahmens 31, also verhältnismäßig geringfügig. Wenn dagegen der Adapter 21 an einer zylindrischen Behälterwand 12 befestigt wird (Fig. 4), werden die Dichtlippen im Bereich der Ausnehmungen 34 stärker verformt als im Bereich der geraden Längsseiten des Rahmens 31, und zwar umso mehr, je kleiner der Krümmungsradius der Behälterwand 12 ist. Diese stärkere Verformung wird durch die größere Höhe der Dichtlippen 35 und die größere Tiefe der Einkerbung 36 in diesem Bereich ermöglicht. In allen Fällen liegen aber die Dichtlippen 35 entlang dem gesamten Umfang des Adapters 21 dichtend an der Behälterwand 12 an.

Die Schnittansicht von Fig. 3 zeigt eine erste Möglichkeit der Befestigung des Adapters 21 an der Behälterwand 12: An der Behälterwand 12 sind Gewindebolzen 37 angeschweißt, die durch die Öffnungen von Buchsen 38 ragen, die einstückig an die Platte 30 des Adapters 21 angeformt sind. Auf der aus den Buchsen 38 hervorstehenden Enden der Gewindebolzen 37 sind Muttern 39 aufgeschraubt, die die Platte 30 unter Zusammendrückung der Dichtung 31 gegen die Behälterwand 12 verspannen. Gegebenenfalls können an der Platte 30 nach unten zur Behälterwand 12 ragende Abstandshalter angeformt sein, die einen definierten Abstand der Platte 30 von der Behälterwand 12 und dadurch eine definierte Lage des Adapters 21 bezüglich der Behälterwand 12 bestimmen.

In der linken Hälfte von Fig. 4 ist eine andere Art der Befestigung des Adapters 21 an der Behälterwand 12 dargestellt. Hierzu wird in einen seitlichen Schlitz 40, der in der Mitte jeder Längsseite des Adapters 21 angebracht ist, ein Schenkel eines aus starkem Blech geformten Winkelstücks 41 eingesetzt und darin mittels einer Schraube 42 befestigt. Der andere Schenkel des Winkelstücks 40, der rechtwinklig nach oben abgebogen ist, ist am Ende hakenförmig umgebogen. Dieses hakenförmig umgebogene Ende umfaßt eine Schiene 43, die an der Behälterwand 12 angeschweißt ist, und es wird mittels wenigstens einer Schraube 44 an der Schiene 43 festgeklemmt. Diese Art der Befestigung ermöglicht es auf einfache Weise, die Stelle, an der der Sensor 13 am Behälter 10 anzubringen ist, zu bestimmen und gegebenenfalls nachträglich durch Verschieben des Adapters 21 entlang der Schiene 38 zu ändern.

Schließlich ist in der rechten Hälfte von Fig. 4 gezeigt, daß es auch möglich ist, den Adapter 21 mittels eines um den Behälter gelegten Spannbandes 49 zu befestigen. Hierzu wird in jeden der Schlitze 40 auf den beiden Seiten des Adapters 21 ein Winkelstück 41 eingesetzt und an den umgebogenen oberen Enden der nach oben abgebogenen Schenkel der beiden Winkelstücke 41 werden hakenförmige Bügel eingehakt, die an den Enden des um den Behälter gelegten Spannbandes 49 angebracht sind, wie dies in der rechten Hälfte von Fig. 4 für eines der beiden Winkelstücke dargestellt ist. Eine solche Spannbandbefestigung ergibt eine noch größere Freizügigkeit in der Wahl des Ortes der Anbringung des Sensors 13 am Behälter 10 und hat zusätzlich den Vorteil, daß kein Eingriff am Behälter selbst vorgenommen werden muß. Das Einhaken des Spannbandes 49 an den oberen Enden der nach oben abgebogenen Schenkel der Winkelstücke 41 hat zur Folge, daß die Angriffspunkte der vom Spannband 49 ausgeübten Kraft am Adapter 21 verhältnismäßig hoch liegen. Dies ist von Vorteil, weil insbesondere bei Behältern mit großem Krümmungsradius die an den Behälter anpressende Kraftkomponente mit der Höhe des Angriffspunktes deutlich zunimmt.

Die Gewindebolzen 37 oder die Schienen 43 können an der Behälterwand 12 anstatt durch Schweißen auch durch Kleben befestigt werden. Diese Art der Befestigung des Adapters 21 eignet sich dann auch für Behälter aus Kunststoff.

Das Sensorgehäuse 22 ist durch eine Querwand 45 in zwei Räume 46 und 47 unterteilt. In dem der Behälterwand 12 abgewandten äußeren Raum 46 ist die Erregungs- und Auswerteelektronik 14 untergebracht, die in üblicher Weise aus elektronischen Bauteilen besteht, die auf einer Schaltungsplatine 48 montiert sind. In dem der Behälterwand 12 und dem Adapter 21 zugewandten inneren Raum 47 sind die Bestandteile des Ultraschallsensors 13 montiert. Hierzu gehört insbesondere ein elektroakustischer Wandler 50, der dazu dient, einen von der Erregungs- und Auswerteschaltung gelieferten Wechselspannungsimpuls in einen Ultraschallimpuls umzuwandeln, der auf die Behälterwand 12 übertragen wird, und Ultraschallschwingungen, die er von der Behälterwand 12 empfängt, in eine elektrische Wechselspannung umzuwandeln, die zu der Erregungs- und Auswerteschaltung übertragen wird.

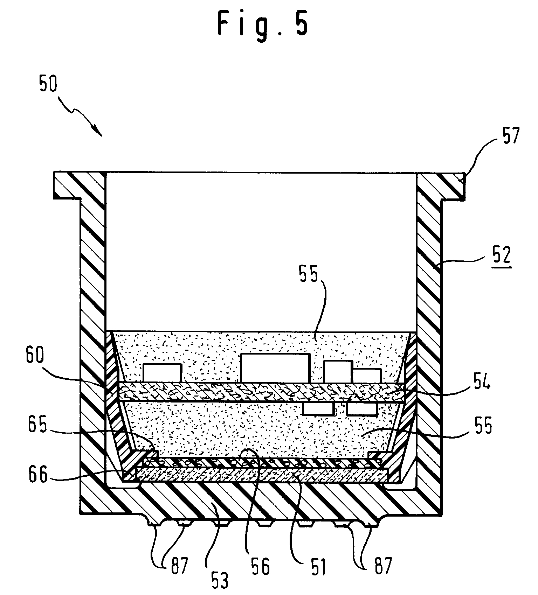

Der elektroakustische Wandler 50 ist in Fig. 5 in näheren Einzelheiten dargestellt. Er enthält als aktives Bestandteil ein piezoelektrisches Element 51, das in bekannter Weise eine Scheibe aus einem Piezokristall ist, auf deren beide Seiten Metallisierungen aufgebracht sind, die als Elektroden dienen. Wenn an die Elektroden eine Wechselspannung angelegt wird, wird der Piezokristall zu mechanischen Schwingungen mit der Frequenz der Wechselspannung angeregt, und wenn auf den Piezokristall mechanische Schwingungen übertragen werden, erzeugt er zwischen den Elektroden eine Wechselspannung mit der Frequenz der mechanischen Schwingungen. In Fig. 5 sind die Elektroden nicht dargestellt, da sie wegen der geringen Dicke der Metallisierung im Vergleich zu der Dicke des Piezokristalls nicht sichtbar sind.

Das piezoelektrische Element 51 ist im Innern eines topfförmigen Wandlergehäuses 52 angeordnet und liegt auf dem Boden 53 des Wandlergehäuses 52 auf, der zugleich die Membran des Ultraschallwandlers 50 bildet. Das Wandlergehäuse 52 besteht aus Kunststoff.

Auf der der Membran 53 abgewandten Seite des piezoelektrischen Elements 51 ist eine Schaltungsplatine 54 angeordnet, die die Bauteile einer Schaltung trägt, die zur Ankopplung des piezoelektrischen Elements 51 an die Erregungs- und Auswerteelektronik 14 dient. Die Schaltungsplatine 54 befindet sich im Abstand von dem piezoelektrischen Element 51, und der Zwischenraum zwischen der Schaltungsplatine 54 und dem piezoelektrischen Element 51 ist mit einer Vergußmasse 55 ausgefüllt, die in flüssigem Zustand eingefüllt wird und sich dann verfestigt. Die der Membran 53 abgewandte Seite des piezoelektrischen Elements 51 ist mit einer Scheibe 56 aus einem geschlossenporigen Schaumstoff bedeckt, die verhindert, daß die Vergußmasse 55 in direkten Kontakt mit dem piezoelektrischen Element 51 kommt. Auch der Raum oberhalb der Schaltungsplatine54 ist bis zu einer solchen Höhe mit der Vergußmasse 55 ausgefüllt, daß alle auf der Schaltungsplatine 54 montierten Schaltungsbestandteile in die Vergußmasse 55 eingebettet sind. Die Vergußmasse 55 ist aus Gründen des Explosionsschutzes vorgeschrieben. Sie bewirkt außerdem eine Dämpfung der Ultraschallwellen, die nach der der Membran 53 entgegengesetzten Seite abgestrahlt werden.

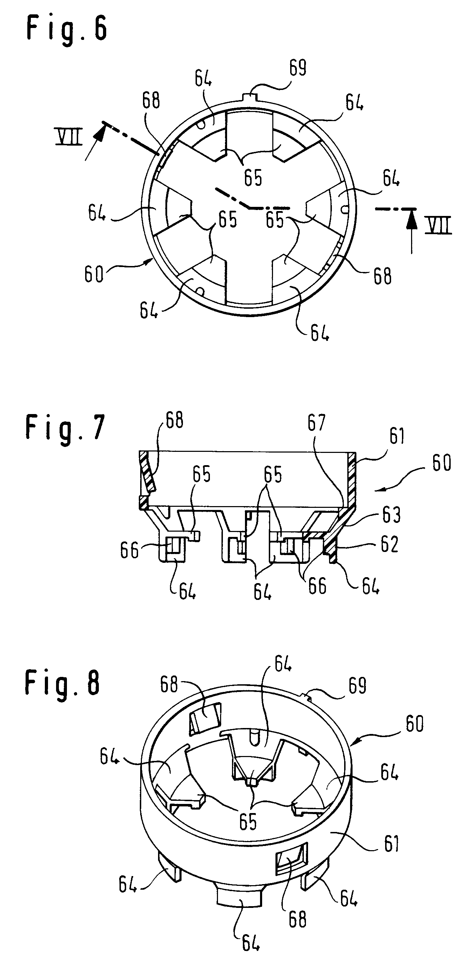

Um den Einbau des piezoelektrischen Elements 51 und der Schaltungsplatine 54 sowie das Vergießen dieser Teile zu erleichtern, ist eine Montagehülse 60 vorgesehen, die in den Figuren 6, 7 und 8 in näheren Einzelheiten dargestellt ist. Die Montagehülse 60 ist ein Formkörper aus Kunststoff, der in Fig. 6 in Draufsicht, in Fig. 7 im Längsschnitt entlang der gebrochenen Linie A-A von Fig. 6 und in Fig. 8 in perspektivischer Ansicht gezeigt ist. Die Montagehülse 60 hat einen breiteren zylindrischen Abschnitt 61, einen engeren zylindrischen Abschnitt 62 von kleinerem Durchmesser und einen konischen Abschnitt 63 zwischen den beiden zylindrischen Abschnitten 61 und 62. Der Außendurchmesser des breiteren zylindrischen Abschnitts 61 entspricht dem Innendurchmesser des topfförmigen Wandlergehäuses 52, und der Innendurchmesser des engeren zylindrischen Abschnitts 62 entspricht dem Durchmesser des piezoelektrischen Elements 51. Der engere zylindrische Abschnitt 62 und der konische Übergangsabschnitt 63 sind durch Ausschnitte in sechs Segmente 64 unterteilt. An jedem Segment 64 ist an dem Übergang zwischen dem zylindrischen Abschnitt 61 und dem konischen Abschnitt 63 eine radial nach innen ragende Tatze 65 angeformt. Unterhalb jeder Tatze 65 ist eine Anschlagnase 66 angeformt, die sich nur über einen Teil der Höhe des zylindrischen Abschnitts 62 nach unten erstreckt und nur geringfügig radial nach innen vorspringt. Am Übergang zwischen dem konischen Abschnitt 63 und dem breiteren zylindrischen Abschnitt 61 ist eine Schulter 67 gebildet. In der Wand des breiteren zylindrischen Abschnitts 61 ist an zwei einander diametral gegenüberliegenden Stellen durch Ausschnitte jeweils eine elastische Raste 68 gebildet, deren freies Ende geringfügig nach innen vorspringt und in einem Abstand von der Schulter 67 liegt, der der Dicke der Schaltungsplatine 54 entspricht. Eine am Umfang des breiteren zylindrischen Abschnitts 61 angeformte Rippe 69 greift in eine entsprechende Nut im Wandlergehäuse 52 ein, wodurch die Montagehülse 60 im Wandlergehäuse 52 gegen Verdrehung gesichert wird.

Die beschriebene Ausbildung der Montagehülse 60 erlaubt eine einfache, schnelle und präzise Montage der Bestandteile des Ultraschallwandlers 50 außerhalb des Wandlergehäuses 52. Das piezoelektrische Element 51 mit der darauf aufgelegten Scheibe 56 aus geschlossenporigem Schaumstoff wird von unten her in den engeren zylindrischen Abschnitt 62 eingeführt, bis das piezoelektrische Element 51 an den Enden der Anschlagnasen 66 anstößt. Dadurch ist die radiale und axiale Lage des piezoelektrischen Elements 51 in der Montagehülse 60 genau festgelegt. Der Durchmesser der Schaumstoffscheibe 56 ist etwas kleiner als der Durchmesser des piezoelektrischen Elements 51 und entspricht dem Abstand zwischen zwei einander diametral gegenüberliegenden Anschlagnasen 66, und die Dicke der Schaumstoffscheibe 56 entspricht der Höhe der Anschlagnasen 66. Somit liegen die Tatzen 65 auf der Oberseite der Schaumstoffscheibe 56 auf, wenn das piezoelektrische Element 51 bis zum Anschlag in die Montagehülse 60 eingeführt ist, und die Anschlagnasen 66 liegen am Umfang der Schaumstoffscheibe 56 an. Dadurch ist die radiale und axiale Lage der Schaumstoffscheibe 56 in der Montagehülse 60 genau festgelegt, und die Schaumstoffscheibe 56 wird durch die Tatzen 65 in enger Anlage an der Oberseite des piezoelektrischen Elements 51 gehalten.

Die Schaltungsplatine 54 ist kreisrund mit einem Durchmesser, der dem Innendurchmesser des breiteren zylindrischen Abschnitts 61 der Montagehülse 60 entspricht. Sie wird von oben her in den breiteren zylindrischen Abschnitt 61 eingeführt, bis sie auf der Schulter 67 aufliegt. Während des Einschiebens werden die Rasten 68 vom Umfangsrand der Schaltungsplatine 54 nach außen gedrückt, bis der Umfangsrand der Schaltungsplatine 54 an den Enden der Rasten 68 vorbeigegangen ist. Dann springen die Rasten 68 aufgrund ihrer Elastizität wieder nach innen vor, so daß sie über die Oberseite der Schaltungsplatine 54 greifen und diese auf der Schulter 67 festhalten. Dadurch ist auch die Schaltungsplatine 54 in axialer und radialer Richtung in der Montagehülse 60 festgelegt. Nun ist die Montagehülse 60 zum Einbau in das topfförmige Wandlergehäuse 52 bereit. Hierzu wird zunächst ein Tropfen eines wärmehärtbaren Klebstoffs auf den Boden 53 des Wndlergehäuses 52 aufgebracht, und anschließend wird die Montagehülse 60 in das Wandlergehäuse 52 eingeschoben, bis das piezoelektrische Element 51 den Boden 53 berührt. Dabei verteilt sich der Klebstoff in einer dünnen Schicht zwischen den einander zugewandten Flächen des piezoelektrischen Elements 51 und des Bodens 53. Dann wird der Klebstoff durch Erwärmung gehärtet, wobei die Montagehülse 60 mit einem Gewicht beschwert wird, damit eine definierte Klebstoffschicht erhalten wird. Die Klebstoffschicht gewährleistet den Kontakt zwischen dem piezoelektrischen Element 51 und der vom Boden 53 gebildeten Membran des Ultraschallwandlers 50, und sie verhindert die Bildung einer Luftschicht zwischen diesen Teilen.

Dann wird von oben Vergußmasse 55 in die Montagehülse 60 eingefüllt. Diese Vergußmasse fließt durch hierfür vorgesehene Öffnungen in der Schaltungsplatine 54 auch in den Zwischenraum zwischen der Schaltungsplatine 54 und der Schaumstoffscheibe 56. Die Schaumstoffscheibe 56 verhindert, daß die Vergußmasse 55 in Kontakt mit der Oberseite des piezoelektrischen Elements 51 kommt. Die Tatzen 65, die den Rand der Schaumstoffscheibe 56 auf die Oberseite des piezoelektrischen Elements 51 drücken, verhindern, daß Vergußmasse 55 zwischen die Schaumstoffscheibe 56 und das piezoelektrische Element 51 kriecht.

Zur Montage des topfförmigen Wandlergehäuses 52 im Sensorgehäuse 22 dient ein Halteteil 70 mit einem Flansch 71, an dem eine Führungsbuchse 72 angeformt ist. Das Wandlergehäuse 52 wird in die Führungsbuchse 72 eingeschoben, deren Innendurchmesser dem Außendurchmesser des Wandlergehäuses 52 entspricht, so daß das Wandlergehäuse 52 gleitbar in der Führungsbuchse 72 gelagert ist. Der Bund 57 am Wandlergehäuse 52 verhindert, daß das Wandlergehäuse 52 aus der Führungsbuchse 72 austritt. In das offene Ende des Wandlergehäuses 52 wird ein Federbecher 73 eingesteckt, der seinerseits einen Bund 74 aufweist, der sich am Ende des Wandlergehäuses 52 abstützt. Der Federbecher 73 nimmt das eine Ende einer Schraubendruckfeder 75 auf. Rings um den Rand des Flansches 71 verläuft ein Bund 76, dessen Innendurchmesser dem Außendurchmesser eines an der Querwand 45 angeformten Trägerrohres 77 entspricht.

Vor dem Anbringen des Halteteils 70 an dem Trägerrohr 77 wird eine Verbindungsleitung 78, die an der Schaltungsplatine 54 angelötet ist und zur Verbindung des Ultraschallwandlers 50 mit der Erregungs- und Auswerteelektronik 16 bestimmt ist, durch einen von der Querwand 45 nach der entgegengesetzten Seite abstehenden Rohrstutzen 79 durchgeführt. Auf den Flansch 71 wird ein Dichtungsring 80 aufgelegt, an dem der Außenrand einer ringförmigen Manschette 81 befestigt ist, deren Innenrand mit einem um das Wandlergehäuse 52 gelegten elastischen Ring 82 verbunden ist. Dann wird der Bund 76 über das Trägerrohr 77 geschoben, und der Flansch 71 wird mittels Schrauben 83, die in verdickte Wandabschnitte des Trägerrohres 77 eingeschraubt werden und von denen eine in Fig. 4 sichtbar ist, am Trägerrohr 77 befestigt. Die Feder 75 ist so bemessen, daß sie zwischen dem Federbecher 73 und der Querwand 45 zur Erzielung einer gewünschten Vorspannung zusammengedrückt ist, wenn das Halteteil 70 am Trägerrohr 77 befestigt ist.

Anschließend kann die Verbindungsleitung 78 an den auf der Schaltungsplatine 48 vorgesehenen Anschlußstellen angelötet werden, und der äußere Raum 41 kann nahezu bis zur Höhe des Rohrstutzens 79 mit einer Vergußmasse gefüllt werden. Der Rohrstutzen 79 verhindert, daß die Vergußmasse in den inneren Raum 42 fließt.

Damit ist der Sensorblock 20 betriebsfertig montiert, und er kann auf dem Adapter 21 befestigt werden. Hierzu wird die Führungsbuchse 72 durch eine Öffnung in der Platte 30 des Adapters 21 gesteckt, so daß der Boden des Wandlergehäuses 72, also die Membran 53 des Ultraschallwandlers 50, an die Außenseite der Behälterwand 12 angelegt wird. Wenn der Sensorblock 20 weiter zum Adapter 21 hin bewegt wird, wird das Wandlergehäuse 52 von der Behälterwand 12 festgehalten, so daß es in die Führungsbuchse 72 hineingeschoben wird, wodurch die Feder 75 weiter zusammengedrückt wird. Wenn schließlich der Sensorblock 20 mittels der Schraube 26 auf dem Adapter 21 befestigt ist, wird die Membran 23 mit einer durch die Feder 75 bestimmten Andruckkraft an die Behälterwand 12 angedrückt.

Ein Vergleich der Figuren 3 und 4 läßt erkennen, daß der Ultraschallwandler 50 bei Anbringung des Sensors 13 an einer ebenen Behälterwand 12 (Fig. 3) weiter aus der Führungsbuchse 72 herausragt als im Falle einer gekrümmten Behälterwand 12 (Fig. 4), wobei aber in jedem Fall die Anlage der Membran 53 an der Behälterwand 12 mit einer durch die Feder 75 bestimmten Andruckkraft gewährleistet ist.

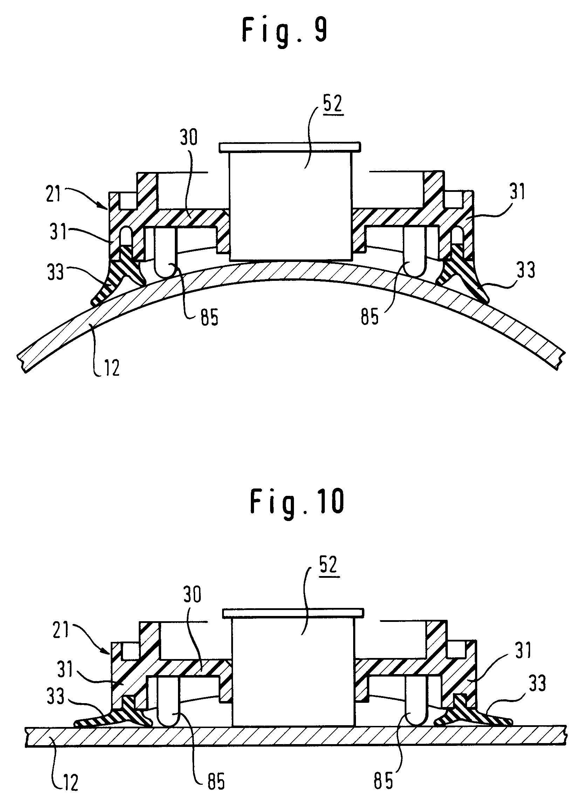

Bei allen Befestigungsweisen des Adapters 21 muß gewährleistet sein, daß die Membran nach der Montage des Sensorblocks im Fall einer ebenen Behälterwand 12 parallel und im Fall einer zylindrischen Behälterwand 12 tangential und symmetrisch ausgerichtet ist. Dies kann nur erreicht werden, wenn bereits der Adapter bei der Montage richtig ausgerichtet wird. In den Figuren 9 und 10 ist schematisch eine bevorzugte Ausführungsform des Adapters 21 dargestellt, mit der diese Bedingung erfüllt wird.

Bei dieser Ausführungsform sind am Adapter 21 Abstandshalter 85 angebracht, die den Abstand der Platte 30 von der Behälterwand 12 entlang zwei parallel zu den Längsseiten des Adapters verlaufenden Linien bestimmen. Die Abstandshalter 85 können Stifte sein, die an den vier Ecken der Platte 30 angebracht sind, oder auch Leisten, die sich entlang den Längsseiten des Rahmens 31 erstrecken. Die Abstandshalter 85 gewährleisten, daß der Adapter 21 bezüglich der Behälterwand 12 eine definierte Lage hat, selbst wenn bei der Spannbandbefestigung die an einer Seite angreifende Kraft größer als die an der anderen Seite angreifende Kraft ist, oder wenn bei der Befestigung mittels Gewindebolzen die Bolzen nicht exakt gerade ausgerichtet sind oder die von den Muttern ausgeübten Kräfte ungleich sind.

Das in den Figuren 9 und 10 schematisch eingezeichnete Wandlergehäuse 52 läßt erkennen, daß infolge der Abstandshalter 85 im Fall einer zylindrischen Behälterwand 12 die Membran genau tangential und symmetrisch zur Behälterwand 12 ausgerichtet ist und im Fall einer ebenen Behälterwand 12 parallel an der Behälterwand 12 anliegt.

## Patentansprüche

1. Anordnung zur Überwachung eines vorbestimmten Füllstands einer Flüssigkeit in einem Behälter mit einem Ultraschallsensor, der an einer auf der Höhe des zu überwachenden Füllstands liegenden Meßstelle an der Außenseite der Behälterwand montiert ist und einen Ultraschallwandler mit einer an der Behälterwand anliegenden Membran enthält, gekennzeichnet durch einen Adapter, der so ausgebildet ist, daß er an Behältern unterschiedlicher Form und/oder aus unterschiedlichen Materialien auf beliebige Weise befestigt werden kann, und durch einen Sensorblock, der die Bestandteile des Ultraschallsensors einschließlich des Ultraschallwandlers enthält und lösbar mit dem an der Behälterwand befestigten Adapter verbunden ist.

2. Anordnung nach Anspruch 1, dadurch gekennzeichnet, daß der Adapter einen an den Umriß des Sensorblocks angepaßten Rahmen aufweist, der an der der Behälterwand zugewandten Seite mit einer rings um den Umfang verlaufenden Dichtung versehen ist.

3. Anordnung nach Anspruch 2, dadurch gekennzeichnet, daß der Rahmen rechteckig ist und an zwei parallelen Querseiten je eine bogenförmige Ausnehmung zur Anpassung an eine gekrümmte Behälterwand aufweist.

4. Anordnung nach Anspruch 3, dadurch gekennzeichnet, daß die Dichtung entlang jeder Querseite mit einer sich entsprechend der Tiefe der Ausnehmung ändernden Höhe ausgebildet ist, so daß die Dichtfläche der Dichtung im entspannten Zustand in einer Ebene liegt.

5. Anordnung nach Anspruch 4, dadurch gekennzeichnet, daß die Dichtung Zwei durch eine Einkerbung getrennte Dichtlippen aufweist und daß die Höhe der Dichtlippen und die Tiefe der Einkerbung entlang jeder Querseite sich entsprechend der Tiefe der Ausnehmung ändern.

6. Anordnung nach einem der Ansprüche 1 bis 5, dadurch gekennzeichnet, das der Rahmen rings um den Umfang einer Platte angebracht ist, die eine Öffnung zur Durchführung des Ultraschallwandlers aufweist.

7. Anordnung nach Anspruch 6, dadurch gekennzeichnet, daß die Platte mit Durchführungen für an der Behälterwand befestigte Gewindebolzen ausgebildet ist und daß der Adapter durch auf die Gewindebolzen aufgeschraubte Muttern an der Behälterwand befestigt ist.

8. Anordnung nach einem der Ansprüche 1 bis 6, dadurch gekennzeichnet, daß am Adapter eine Klemmvorrichtung zur Befestigung des Adapters an einer an der Behälterwand befestigten Schiene angebracht ist.

9. Anordnung nach einem der Ansprüche 1 bis 6, dadurch gekennzeichnet, daß am Adapter Befestigungsteile für ein um den Behälter gelegtes Spannband angebracht sind.

10. Anordnung nach einem der vorhergehenden Ansprüche, dadurch gekennzeichnet, daß am Adapter Abstandshalter angebracht sind, die eine genaue Lage des Adapters bezüglich der Behälterwand definieren.

11. Anordnung nach Anspruch 10, dadurch gekennzeichnet, daß die Abstandshalter Stifte sind, die an den vier Ecken des Adapters angebracht sind.

12. Anordnung nach Anspruch 10, dadurch gekennzeichnet, daß die Abstandshalter Leisten sind, die sich entlang den Längsseiten des Adapters erstrecken.
